(19) **Europäisches Patentamt / European Patent Office / Office européen des brevets**

(11) **EP 4 141 989 B1**

(12) # EUROPEAN PATENT SPECIFICATION

(45) Date of publication and mention of the grant of the patent:
**31.12.2025 Bulletin 2026/01**

(21) Application number: **21869643.3**

(22) Date of filing: **10.09.2021**

(51) International Patent Classification (IPC):
*H01M 4/1395* (2010.01)    *H01M 4/04* (2006.01)
*H01M 4/62* (2006.01)    *H01M 10/052* (2010.01)
*H01M 4/38* (2006.01)    *H01M 4/40* (2006.01)
*H01M 4/134* (2010.01)

(52) Cooperative Patent Classification (CPC):
**H01M 4/62; H01M 4/04; H01M 4/0404;**
**H01M 4/134; H01M 4/1395; H01M 4/36;**
**H01M 4/366; H01M 4/38; H01M 4/382; H01M 4/40;**
**H01M 4/405; H01M 4/5815; H01M 10/052;**
**Y02E 60/10**

(86) International application number:
**PCT/KR2021/012373**

(87) International publication number:
**WO 2022/060021 (24.03.2022 Gazette 2022/12)**

(54) **METHOD FOR MANUFACTURING LITHIUM METAL ELECTRODE, LITHIUM METAL ELECTRODE MANUFACTURED THEREBY, AND LITHIUM SECONDARY BATTERY COMPRISING SAME**

VERFAHREN ZUR HERSTELLUNG EINER LITHIUMMETALLELEKTRODE, DAMIT HERGESTELLTE LITHIUMMETALLELEKTRODE UND LITHIUMSEKUNDÄRBATTERIE DAMIT

PROCÉDÉ DE FABRICATION D'ÉLECTRODE MÉTALLIQUE AU LITHIUM, ÉLECTRODE MÉTALLIQUE AU LITHIUM AINSI FABRIQUÉE ET BATTERIE SECONDAIRE AU LITHIUM LA COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.09.2020 KR 20200118835**
**09.09.2021 KR 20210120225**

(43) Date of publication of application:
**01.03.2023 Bulletin 2023/09**

(73) Proprietor: **LG Energy Solution, Ltd.**
**Seoul 07335 (KR)**

(72) Inventors:
• **KIM, Myeongseong**
**Daejeon 34122 (KR)**

• **KIM, Soohyun**
**Daejeon 34122 (KR)**
• **KIM, Kihyun**
**Daejeon 34122 (KR)**
• **LEE, Keonje**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**EP-A1- 4 037 022    WO-A1-2020/125516**
**CN-A- 110 444 735    KR-A- 20190 033 922**
**KR-B1- 100 413 796    US-A1- 2019 140 257**

**Description**

[Technical Field]

The present invention relates to a manufacturing method of a lithium metal electrode.

[Background Art]

As an application range of a lithium secondary battery is extended to an electric vehicle (EV) and an electric storage system (ESS) as well as portable electronic devices, the demand for the lithium secondary battery with high capacity, high-energy density, and a long lifetime has been increased.

A lithium-sulfur battery among various lithium secondary batteries is a battery system using a sulfur-based material having a sulfur-sulfur bonds as a positive electrode and using a lithium metal, a carbon-based material in which intercalation/deintercalation of lithium ions occurs, silicon or tin that forms an alloy with lithium, or the like as a negative electrode.

There is an advantage that sulfur, which is used for the positive electrode in the lithium-sulfur battery, has a low atomic weight, is very rich in resources and thus easy to supply and receive, and is cheap, non-toxic and environmentally friendly.

In addition, the lithium-sulfur battery has a theoretical specific capacity of 1,675 mAh/g derived from a conversion reaction of lithium ion and sulfur ($S_8 + 16Li^+ + 16e^- \rightarrow 8Li_2S$) in the positive electrode, and if the lithium metal is used as the negative electrode, the theoretical energy density is 2,600 Wh/kg. Since the energy density of the lithium-sulfur battery is much higher than the theoretical energy density of other battery systems currently under study (Ni-MH battery: 450Wh/kg, Li-FeS battery: 480 Wh/kg, Li-MnO$_2$ battery: 1,000Wh/kg, Na-S battery: 800 Wh/kg) and a lithium-ion battery (250 Wh/kg), the lithium-sulfur battery, among secondary batteries which have been developed up to now, is attracting attention as a lithium secondary battery with high capacity, environment friendliness, and low price.

In such a lithium-sulfur battery, if lithium metal is used as a negative electrode, since a theoretical specific capacity is very high as 3,860 mAh/g and a standard hydrogen electrode (SHE) is also very low as -3.045 V, and thus it is possible to realize a battery with high capacity and high-energy density, various studies are being conducted as a next-generation battery system.

However, since the lithium metal has high chemical/electrochemical reactivity, the growth and porosity of lithium dendrite occur as charging/discharging proceeds, and as a result, there is a problem that a battery lifetime characteristic is not good. To this end, many studies on a protective layer formed on the surface of the lithium metal are being conducted.

A lithium fluoride (LiF) protective layer among protective layers formed on the surface of the lithium metal inhibits the growth of lithium dendrite with high ionic conductivity, thereby securing an effect of improving capacity and lifetime characteristics when applied to the battery. Accordingly, in the related art, various methods for forming the lithium fluoride protective layer on the surface of the lithium metal have been studied.

In the related art, the lithium fluoride protective layer is formed by a method of immersing a lithium metal in fluoroethylene carbonate (FEC) for a predetermined time or more or applying a solution containing fluoroethylene carbonate on the surface of the lithium metal.

However, an oxidation layer (native layer) of LiOH, Li$_2$O, Li$_2$CO$_3$, or the like is present on the surface of the lithium metal, and due to this, since a reaction between fluoroethylene carbonate or solution containing fluoroethylene carbonate and the lithium metal is ununiform, a difference in physical properties such as components, thickness, density and the like of the lithium fluoride protective layer formed is caused.

The difference in physical properties of the lithium fluoride protective layer causes a difference in local current density during the charging/discharging to accelerate the formation of lithium dendrite on the surface of the lithium metal. In addition, the lithium dendrite formed in this way causes internal short-circuit of the battery and dead lithium, which not only increases the physical and chemical instability of the lithium secondary battery, but also causes a problem of accelerating the reduction in capacity and cycle lifetime of the battery.

Accordingly, it is required to develop a technology capable of solving the problem of reactivity of the lithium metal by forming a uniform lithium fluoride protective layer on the surface of lithium metal through a simple process.

[Prior Art Documents]

[Patent Document]

Korean Laid-open Patent Publication No. 2019-0071618 (June 24, 2019) Continuous Manufacturing Method of Lithium Secondary Battery Forming Passive layer on the Surface of Lithium Metal Electrode and Lithium Secondary Battery prepared by the Same

EP 4 037 022 A1 discloses a method of preparing a lithium metal electrode, wherein the method includes providing a lithium metal strip, and providing a lubricant composition including a fluorine-based solvent and a fluorine-based compound on the lithium metal strip and rolling the lithium metal strip.

KR 100 413 796 B1 discloses a method for preparing a lithium metal anode protection layer for a lithium battery comprising activating the surface of a lithium metal anode; and forming a LiF protection layer on the surface of a solidifying material to prepare a lithium metal anode protection layer between the lithium metal anode and an electrolyte.

CN 110 444 735 A discloses a surface modification method of a lithium metal battery negative electrode and a lithium metal battery. The surface modification method comprises the following steps of immersing the lithium metal battery negative electrode in a mixed solution comprising a lithium salt, an ether solvent and a fluoride solvent, taking out and drying the lithium metal negative electrode, and forming a protection layer comprising a lithium oxide and lithium fluoride on a surface of the lithium metal negative electrode to obtain the surface-modified lithium metal negative electrode.

[Non-Patent Document]

Ngoc Duc Trinh et al., An Artificial Lithium Protective Layer that Enables the Use of Acetonitrile-Based Electrolytes in Lithium Metal Batteries, Angewandte Chemie, 2018, 57(18), 5072-5075

[Disclosure]

[Technical Problem]

Accordingly, as a result of conducting various studies to solve the above problems, the inventors of the present invention have confirmed that when a lithium fluoride protective layer was formed through a process of directly applying and rolling fluoroethylene carbonate on the surface of a lithium metal, a growth inhibitory effect of lithium dendrite was excellent, and completed the present invention.

Therefore, it is an object of the present invention to provide a manufacturing method of a lithium metal electrode capable of forming a uniform lithium fluoride protective layer with a high fluorine content on the surface of lithium metal.

[Technical Solution]

In order to achieve the objects, the present invention provides a manufacturing method of a lithium metal electrode comprising steps of: (a) applying fluoroethylene carbonate by pouring, spraying, sprinkling, or atomization on at least one surface of a lithium metal layer; and (b) rolling the lithium metal layer applied with the fluoroethylene carbonate to form a lithium fluoride protective layer on the at least one surface of the lithium metal layer.

The lithium metal layer may include a lithium metal or a lithium alloy.

The rolling step (b) may be performed by positioning the lithium metal layer applied with the fluoroethylene carbonate between rolling units and applying pressure.

The rolling step (b) may be performed under a temperature condition of 10 to 80°C.

A thickness reduction rate of the lithium metal layer before and after the rolling step (b) may be 10% or more.

Further described herein is a lithium metal electrode manufactured by the above manufacturing method, and including the lithium metal layer; and the lithium fluoride protective layer formed on the at least one surface of the lithium metal layer.

The lithium fluoride protective layer may have a thickness of 10 to 500 nm.

The lithium fluoride protective layer may have a fluorine content of 0.1 to 10 atom%.

In addition, a lithium secondary battery is described herein including a positive electrode having a positive electrode active material; a negative electrode including the lithium metal electrode; a separator between the positive electrode and the negative electrode; and an electrolyte.

The positive electrode active material may include at least one selected from the group consisting of a sulfur element and a sulfur compound.

The positive electrode active material may include at least one selected from the group consisting of inorganic sulfur, $Li_2S_n$ ($n \geq 1$), a disulfide compound, an organic sulfur compound, and a carbon-sulfur polymer (($C_2S_x)_n$, x = 2.5 to 50, $n \geq 2$).

[Advantageous Effects]

According to the manufacturing method of the lithium metal electrode of the present invention, a uniform lithium fluoride protective layer with a high fluorine content may be formed by directly applying (by pouring, spraying, sprinkling, or atomization) and rolling fluoroethylene carbonate on the surface of a lithium metal, thereby effectively inhibiting the generation of lithium dendrite, and thus enabling higher capacity and longer lifetime of a lithium secondary battery including the lithium metal electrode.

[Description of Drawings]

FIG. 1 is a graph illustrating XPS spectra of a lithium fluoride protective layer according to Experimental Example 1.

FIG. 2 is a graph showing an XPS depth analysis result of a lithium fluoride protective layer according to Example 1.

FIG. 3 is a graph showing an XPS depth analysis result of a lithium fluoride protective layer according to Comparative Example 2.

FIG. 4 is a graph showing a performance evaluation result of another lithium secondary battery according to Experimental Example 2.

[Best Mode]

Hereinafter, the present invention will be described in more detail.

Terms and words used in the present specification and claims should not be interpreted as being limited to typical or dictionary meanings, but should be interpreted as meanings and concepts which comply with the technical spirit of the present invention, based on the principle that the present inventor can appropriately define the concepts of the terms to describe his/her own invention in the best manner.

Terms used in the present invention are used only to describe specific embodiments, and are not intended to limit the present invention. As used herein, singular forms include plural forms, unless otherwise clearly indicated in the context. In the present invention, it should be understood that term "comprising" or "having" indicates that a feature, a number, a step, an operation, a component, a part or the combination thereof described in the specification is present, but does not exclude a possibility of presence or addition of one or more other features, numbers, steps, operations, components, parts or combinations thereof, in advance.

The term "composite" used herein means a material of expressing a more effective function while forming different phases physically and chemically by combining two or more materials.

The term "polysulfide" used herein is a concept including both "polysulfide ion ($S_x^{2-}$, x = 8, 6, 4, 2)" and "lithium polysulfide ($Li_2S_x$ or $LiS_x^-$, x = 8, 6, 4, 2)".

A lithium-sulfur battery among various secondary batteries exhibits high theoretical discharging capacity and theoretical energy density and further, a lithium metal, which is mainly used as a negative electrode active material, has a very small atomic weight (6.94g/a.u.) and density (0.534 $g/cm^3$), so that it is attracting attention as a next-generation battery due to its ease of miniaturization and weight reduction.

However, when the lithium metal is used as a negative electrode in the battery, the non-uniformity in current density may occur on the surface of the lithium metal due to several factors according to the battery driving, and due to this, lithium dendrite is generated to cause a short circuit of the battery, which causes a problem of lowering the overall performance of the battery.

In addition, in the case of the lithium-sulfur battery, lithium polysulfide ($Li_2S_x$, generally x > 4) with a high oxidation number of sulfur among lithium polysulfides ($Li_2S_x$, x = 8, 6, 4, 2) formed in the positive electrode during the battery driving is continuously dissolved due to high solubility in an electrolyte and eluted out of a positive electrode reaction area to be moved to the negative electrode. At this time, the lithium polysulfide eluted from the positive electrode causes a side reaction with a lithium metal electrode, which is a negative electrode, and as the lithium sulfide adheres to the surface of the lithium metal electrode, it not only causes passivation of the lithium metal electrode, but also lowers the utilization rate of sulfur due to the elution of lithium polysulfide, so that the theoretical discharge capacity can be realized up to only about 70% thereof, which causes a problem of accelerating the reduction in capacity and cycle lifetime as the cycle progresses.

In the related art, in order to prevent the growth of lithium dendrite, a lithium fluoride (LiF) protective layer with an excellent ionic conductivity characteristic was introduced on the surface of the lithium metal. Specifically, in the related art, in order to form the lithium fluoride protective layer on the surface of the lithium metal, a method of immersing the lithium metal in fluoroethylene carbonate (FEC) or applying a solution containing fluoroethylene carbonate, or the like was used.

However, in the case of the method used in the related art, since it is difficult to form uniformly the lithium fluoride protective layer due to an oxidation layer inevitably present in the lithium metal, there is a problem that it is difficult to sufficiently secure an effect of inhibiting the generation of lithium dendrite.

Accordingly, the present invention provides a manufacturing method of a lithium metal electrode with an excellent growth inhibition effect of lithium dendrite by uniformly forming a lithium fluoride protective layer on the surface of a lithium metal by a process of applying and rolling fluoroethylene carbonate directly on the surface of the lithium metal.

The manufacturing method of the lithium metal electrode according to the present invention includes the steps of:

(a) applying fluoroethylene carbonate by pouring, spraying, sprinkling, or atomization on at least one surface of a lithium metal layer; and

(b) rolling the lithium metal layer applied with the fluoroethylene carbonate to form a lithium fluoride protective layer on at least one surface of the lithium metal layer.

In the case of the present invention, the fluoroethylene carbonate is directly applied and rolled on the surface of the lithium metal to form a lithium fluoride protective layer with a high fluorine content and a uniform thickness on the surface of the lithium metal. In the related art, a method of immersing the lithium metal in fluoroethylene carbonate or applying a solvent containing the fluoroethylene carbonate on the surface of the lithium metal, or the like was used. However, the method of forming the lithium fluoride protective layer in the related art cannot effectively prevent the growth of lithium dendrite because the thickness is ununiform due to the oxidation layer formed on the surface of the lithium metal or a lithium fluoride protective layer with a small fluorine content is formed. In addition, there was provided a method of forming a lithium fluoride protective layer through a pressing (rolled-bonding) process with a polymer film containing fluorine such as polytetrafluoroethylene and polyvinylidene fluoride. As such, in the case of the method of forming the lithium fluoride protective layer by pressing the polymer film containing fluorine and lithium, there is a problem that the growth of lithium dendrite cannot be prevented by hindering the migration of lithium ions due to a residual polymer film remaining after the reaction with lithium.

In comparison, in the present invention, since the uniform reaction of the lithium metal with fluoroethylene carbonate may be performed on the surface of the lithium metal by applying the fluoroethylene carbonate directly on the surface of the lithium metal and rolling the surface of the lithium metal, the lithium fluoride protective layer is uniformly formed on the surface of the lithium metal and the content of fluorine included in the lithium fluoride protective layer is also high. The lithium fluoride protective layer formed in this way effectively inhibits the formation of lithium dendrite, thereby improving the stability of the lithium metal electrode and the capacity and lifetime characteristics of the lithium secondary battery including the same. In addition, the manufacturing method of the lithium metal electrode according to the present invention has an advantage that the process is very simple and easy to apply.

Hereinafter, the present invention will be described in more detail for each step.

First, step (a) is to apply fluoroethylene carbonate on the surface of the lithium metal layer by pouring, spraying, sprinkling, or atomization, wherein the fluoroethylene carbonate is applied on at least one surface of the lithium metal layer.

The lithium metal layer may include a lithium metal or a lithium alloy (Li-M).

A metal M included in the lithium alloy may be at least one selected from the group consisting of aluminum (Al), magnesium (Mg), zinc (Zn), boron (B), silicon (Si), tin (Sn), germanium (Ge), strontium (Sr), lanthanum (La), silver (Ag), indium (In), tantalum (Ta), and niobium (Nb).

In the present invention, the application is performed by directly applying the fluoroethylene carbonate on at least one surface of the lithium metal layer.

The application is performed by pouring, spraying, sprinkling, or atomization.

There is no limit to the number of times of application of the fluoroethylene carbonate, which may be performed one or more times.

Subsequently, step (b) is to roll the lithium metal layer applied with the fluoroethylene carbonate manufactured in step (a) described above to form the lithium fluoride protective layer on at least one surface of the lithium metal layer.

A uniform lithium fluoride protective layer may be formed on the surface of a lithium metal layer by reacting the lithium metal with the fluoroethylene carbonate applied on the surface of the lithium metal layer through rolling in step (b).

There is no limit to the number of rolling, and it may be performed one or more times.

The rolling may be performed by positioning the lithium metal layer applied with the fluoroethylene carbonate between rolling units and applying pressure.

The rolling unit is not particularly limited to conventional units used in the art. As an example, the rolling unit may use a roll press, a laminator, etc.

The rolling may be performed in a temperature condition of 10 to 80°C. During the rolling, the temperature and the time may vary depending on process conditions. When the rolling temperature and time are less than the above range, since a reaction between the fluoroethylene carbonate and the lithium metal is not sufficiently made, the lithium fluoride protective layer may be non-uniformly formed. On the contrary, when the rolling temperature and time exceed the above range, there is a problem that the lithium metal is deformed.

The thickness of the lithium metal layer is reduced through the rolling in step (b), and specifically, a thickness reduction rate according to Equation 1 below may be 10% or more, preferably 10 to 30%. When the thickness reduction rate of the lithium metal layer through rolling is within to the above range, there is an advantage that the uniform lithium fluoride protective layer can be formed on the surface of the lithium metal layer, thereby more effectively inhibiting the generation of lithium dendrite.

[Equation 1]

$$\text{Thickness reduction rate (\%)} = \frac{\text{thickness of lithium metal layer before rolling - thickness of lithium metal layer after rolling}}{\text{thickness of lithium metal layer before rolling}} \times 100$$

In the present invention, after the rolling in step (b) above, a step of removing the remaining fluoroethylene carbonate and drying the lithium fluoride protective layer to be firmly fixed onto the surface of the lithium metal layer may be further performed.

The drying is performed at a temperature and a time at a level capable of sufficiently removing the fluoroethylene carbonate, and since the condition may vary depending on process conditions, it is not particularly limited in the present invention.

As an example, the drying may be performed by drying using warm air, hot air, and low humidity air, vacuum drying, and irradiation of (far-)infrared rays and electron beam.

As described above, in the manufacturing method of the lithium metal electrode according to the present invention, the lithium metal electrode including the uniform lithium fluoride protective layer with the high fluorine content may be easily manufactured by applying and rolling the fluoroethylene carbonate directly on the surface of the lithium metal layer. The lithium fluoride protective layer manufactured by the manufacturing method of the present invention not only has an excellent growth inhibition effect of lithium dendrite on the surface of the lithium metal due to excellent uniformity, but also exhibits a predetermined level of ionic conductivity, thereby improving capacity and lifetime characteristics of the lithium secondary battery including the same.

In addition, a lithium metal electrode manufactured by the manufacturing method is described herein.

The lithium metal electrode includes a lithium metal layer; and a lithium fluoride protective layer formed on at least one surface of the lithium metal layer.

The lithium metal layer may include a lithium metal or a lithium alloy. Further, the lithium metal layer may be a lithium metal thin film or a lithium metal plate including lithium metal powder or having a lithium metal thin film formed on at least one surface of a negative electrode current collector.

The negative electrode current collector is to support the lithium metal layer as the negative electrode active material, and is not particularly limited as long as the negative electrode current collector has high conductivity without causing a chemical change in the corresponding battery. For example, copper, stainless steel, aluminum, nickel, titanium, palladium, plastic carbon, copper, or stainless steel surface-treated with carbon, nickel, silver, and the like, and an aluminum-cadmium alloy, and the like may be used.

The negative electrode current collector may form fine irregularities on the surface thereof to reinforce a binding force with the lithium metal thin film as the negative electrode active material, and various forms such as a film, a sheet, a foil, a mesh, a net, a porous body, a foam body, a nonwoven body, and the like may be used.

The method of forming the lithium metal thin film is not particularly limited, and may use a method of forming a layer or film used commonly in the art. For example, methods such as pressing, coating, deposition, and the like may be used.

The lithium fluoride protective layer may be formed according to the manufacturing method as described above and the thickness thereof may be 10 to 500 nm, preferably 50 to 200 nm. When the thickness of the lithium fluoride protective layer is less than the range, an effect by the lithium fluoride protective layer as described above is insignificant, and on the contrary, when the thickness thereof excesses the range, an overvoltage problem during charging/discharging may occur.

As a result of X-ray photoelectron spectroscopy (XPS) analysis, the fluorine content of the lithium fluoride protective layer may be 0.1 to 10 atom%, preferably 0.5 to 5 atom% of the total elements included in the lithium fluoride protective layer. In the lithium metal electrode according to the present invention, the lithium fluoride protective layer is uniformly formed according to the manufacturing method as described above, so that the fluorine content in the lithium fluoride protective layer is higher than that of a lithium metal electrode including a lithium fluoride protective layer in the related art.

The ionic conductivity of the lithium fluoride protective layer may be in a range of $10^{-20}$ to $10^{-4}$ S/cm, preferably $10^{-12}$ to $10^{-7}$ S/cm.

Further, a surface resistance in an electrolyte of the lithium metal electrode formed with the lithium fluoride protective layer is 100 to 300 $\Omega$, preferably 150 to 200 $\Omega$, and has no change for 1 to 72 hours, preferably 24 to 65 hours, more preferably 36 to 60 hours. This means that unlike the related art, a continuous electrochemical reaction of the battery is maintained on the surface of the lithium metal electrode, and the lithium fluoride protective layer does not react with the electrolyte, but is maintained in a stable state.

In addition, a lithium secondary battery including the lithium metal electrode is described herein.

The lithium secondary battery includes a positive electrode, a negative electrode, and an electrolyte interposed therebetween, and includes the lithium metal electrode according to the present invention as the negative electrode.

Preferably, the lithium secondary battery may be a lithium-sulfur battery including sulfur as a positive electrode active material.

The positive electrode may include a positive electrode current collector, and a positive electrode active material layer applied on at least one surface of the positive electrode current collector.

The positive electrode current collector is for supporting the positive electrode active material and is as described in the negative electrode current collector.

The positive electrode active material layer includes a positive electrode active material, optionally, may further include a conductive material, a binder, an additive, and the like.

The positive electrode active material may include a sulfur-based compound, specifically, one or more selected from the group consisting of a sulfur element and a sulfur compound. The sulfur element may include inorganic sulfur ($S_8$). In addition, the sulfur compound may be at least one selected from the group consisting of $Li_2S_n$ ($n \geq 1$), a disulfide compound, an organic sulfur compound, and a carbon-sulfur polymer ($((C_2S_x)_n$, $x = 2.5$ to $50$, $n \geq 2$). Preferably, the positive electrode active material may include inorganic sulfur ($S_8$).

In the case of sulfur included in the positive electrode active material, since the sulfur alone has no electrical conductivity, the sulfur is composed and used with a conductive material such as a carbon material. Accordingly, the sulfur may be included in the form of a sulfur-carbon composite. Preferably, the positive electrode active material may be a sulfur-carbon composite.

The carbon included in the sulfur-carbon composite is a porous carbon material, and provides a skeleton so that the sulfur may be uniformly and stably fixed and compensates for low electrical conductivity of sulfur, so that the electrochemical reaction may be smoothly performed.

The porous carbon material may be generally prepared by carbonizing precursors of various carbon materials. The porous carbon material includes pores that are not constant therein, and an average diameter of the pores is in a range of 1 to 200 nm and the porosity may be in a range of 10 to 90% of the total volume of the porous carbon material. When the average diameter of the pores is less than the range, the pore size is only at a molecular level, and thus immersion of sulfur is impossible, and on the contrary, when the average diameter excesses the range, the mechanical strength of the porous carbon material is weakened, and thus it is not preferable to be applied to the manufacturing process of the electrode.

The form of the porous carbon material may be a spherical shape, a rod shape, a needle shape, a plate shape, a tube shape, or a bulk shape, and may be used without limitations as long as the porous carbon material is commonly used in a lithium-sulfur battery.

The porous carbon material has a porous structure or a structure with a high specific surface area, and may be any one as long as the porous carbon material is commonly used in the art. For example, the porous carbon material may be one or more selected from the group consisting of graphite; graphene; carbon black such as Denka black, acetylene black, Ketjen black, channel black, furnace black, lamp black, and thermo black; carbon nanotube (CNT) such as single wall carbon nanotube (SWCNT) and multi-wall carbon nanotube (MWCNT); carbon fiber such as graphite nanofiber (GNF), carbon nanofiber (CNF), and activated carbon fiber (ACF); graphite such as natural graphite, artificial graphite, and expanded graphite, and activated carbon, but is not limited thereto. Preferably, the porous carbon material may be carbon nanotube.

The sulfur-carbon composite may include sulfur in an amount of 60 to 90 wt.%, preferably 65 to 85 wt.%, and more preferably 70 to 80 wt.% based on 100 wt.% of the sulfur-carbon composite. When the content of sulfur is less than the aforementioned range, as the content of the porous carbon material in the sulfur-carbon composite is relatively increased, the specific surface area is increased, so that the content of the binder during the manufacturing of the positive electrode is increased. An increase in the amount of the binder used may eventually increase the surface resistance of the positive electrode and serves as an insulator for blocking an electron pass to deteriorate the performance of the battery. On the contrary, when the content of the sulfur excesses the aforementioned range, the sulfurs which do not bind to the porous carbon material are aggregated or re-eluted to the surface of the porous carbon material, and as a result, it is difficult to receive electrons, and thus, the sulfurs can not participate in the electrochemical reaction, so that the capacity loss of the battery may occur.

In addition, in the sulfur-carbon composite, the sulfurs are located in at least one of the inner and outer surfaces of the porous carbon material, and at this time, may be present in the region of less than 100%, preferably 1 to 95%, and more preferably 60 to 90% of the entire inner and outer surfaces of the porous carbon material. When the sulfurs are present on the inner and outer surfaces of the porous carbon material within the range, a maximum effect may be exhibited in terms of an electron transfer area and wettability with an electrolyte. Specifically, since the sulfurs are thinly and uniformly impregnated on the inner and outer surfaces of the porous carbon material in the range, in the charging/discharging process, an electron transfer contact area may be increased. If the sulfurs are located in the 100% area of the entire inner and outer surfaces of the porous carbon material, the carbon material is completely covered with sulfur to decrease the wettability for the electrolyte and lower the contact with the conductive material included in the electrode, so that the sulfurs do not receive electrons and thus cannot participate in an electrochemical reaction.

The manufacturing method of the sulfur-carbon composite is not particularly limited in the present invention and a method used commonly in the art may be used. For example, a method of simply mixing the sulfur and the porous carbon material, and then heating and compositing the mixture may be used.

The positive electrode active material may further include at least one additive selected from a transition metal element, IIIA group elements, IVA group elements, sulfur compounds of these elements, and alloys of these elements and sulfur in addition to the aforementioned composition.

As the transition metal element, Sc, Ti, V, Cr, Mn, Fe, Co, Ni, Cu, Zn, Y, Zr, Nb, Mo, Tc, Ru, Rh, Pd, Os, Ir, Pt, Au, Hg or the like may be included, as the IIIA group elements, Al, Ga, In, Tl, or the like may be included, and as the IVA group elements, Ge, Sn, Pb, or the like may be included.

The positive electrode active material may be included in an amount of 40 to 95 wt.%, preferably 50 to 90 wt.%, based on 100 wt.% of the entire positive electrode active material layer constituting the positive electrode. When the content of the positive electrode active material is less than the range, it is difficult to sufficiently exhibit the electrochemical reaction of the positive electrode, and on the contrary, when the content thereof exceeds the range, there is a problem that the content of the conductive material and the binder, which will be described below, is relatively insufficient, so that the resistance of the positive electrode is increased and the physical properties of the positive electrode are deteriorated.

The positive electrode active material layer may optionally further include a conductive material so that electrons smoothly move within the positive electrode (specifically, the positive electrode active material) and a binder for well attaching the positive electrode active material to a current collector.

The conductive material is a material that electrically connects the electrolyte and the positive electrode active material to serves as a path through which electrons move from the current collector to the positive electrode active material, and may be used without limitation as long as the material has conductivity.

For example, as the conductive material, graphite such as natural graphite and artificial graphite; carbon black such as super-P, Denka black, acetylene black, Ketjen black, channel black, furnace black, lamp black, and thermo black; carbon derivatives such as carbon nanotube and fullerene; conductive fibers such as carbon fiber and metal fiber; fluoride carbon; metal powder such as aluminum powder and nickel powder, or conductive polymers such as polyaniline, polythiophene, polyacetylene, and polypyrrole may be used alone or in combination.

The conductive material may be included in an amount of 0.01 to 30 wt.% based on 100 wt.% of the entire positive electrode active material layer constituting the positive electrode. If the content of the conductive material is less than the range, the voltage and the capacity are reduced because the electron transfer between the positive electrode active material and the current collector is not easy. On the contrary, if the content of the conductive material exceeds the range, since the ratio of the positive electrode active material is relatively reduced to decrease the total energy (charge amount) of the battery, it is preferable to determine an appropriate content within the above-described range.

The binder maintains the positive electrode active material in the positive electrode current collector, and organically connects the positive electrode active materials to more increase the binding strength therebetween, and any binder known in the art may be used.

For example, the binder may be one selected from the group consisting of a fluorine resin-based binder including polyvinylidene fluoride (PVdF) or polytetrafluoroethylene (PTFE); a rubber-based binder including styrene butadiene rubber (SBR), acrylonitrile-butadiene rubber, and styreneisoprene rubber; a cellulose-based binder including carboxyl methyl cellulose (CMC), starch, hydroxypropylcellulose, and regenerated cellulose; a polyalcohol-based binder; a polyolefin-based binder including polyethylene and polypropylene; a polyimide-based binder; a polyester-based binder; and a silane-based binder, or mixtures or copolymers of two or more thereof.

The content of the binder may be 0.5 to 30 wt.% based on 100 wt.% of the entire positive electrode active material layer constituting the positive electrode. When the content of the binder is less than the range, the physical properties of the positive electrode are deteriorated and thus the positive electrode active material and the conductive material may be detached, and when the content exceeds the range, the ratio of the positive electrode active material and the conductive material is relatively reduced in the positive electrode and thus the battery capacity may be reduced, so that it is preferable to determine an appropriate content in the aforementioned range.

In the present invention, the manufacturing method of the positive electrode is not particularly limited, and a known method or various methods of modifying the method can be used by those skilled in the art.

For example, the positive electrode may be manufactured by preparing a positive electrode slurry composition containing the composition as described above and then applying the prepared positive electrode slurry composition on at least one surface of the positive electrode current collector.

The positive electrode slurry composition may include the positive electrode active material, the conductive material, and the binder, and may further include a solvent.

The solvent may be a solvent that can uniformly disperse the positive electrode active material, the conductive material, and the binder. As the solvent, water as an aqueous solvent is most preferable, wherein water may be distilled water and deionzied water. However, the solvent is not limited thereto, and a lower alcohol that is easily miscible with water may be used if necessary. The lower alcohol may comprise methanol, ethanol, propanol, isopropanol, and butanol, and preferably, these may be used as a mixture with water.

The content of the solvent may be contained at a level having a concentration enough to facilitate the application and a specific content varies according to applying method and device.

The positive electrode slurry composition may additionally include a material commonly used for improving the functions thereof in the art if necessary. For example, a viscosity controlling agent, a fluidizing agent, a filler, and the like may be included.

The method of applying the positive electrode slurry composition is not particularly limited in the present invention, and for example, may be methods such as doctor blading, die casting, comma coating, screen printing, and the like. In addition, after molding on a separate substrate, a positive electrode slurry may be applied on the positive electrode current collector by a pressing or lamination method.

After the application, a drying process for removing the solvent may be performed. The drying process is carried out at a temperature and a time at a level capable of sufficiently removing the solvent, and the conditions may vary depending on the type of solvent, and thus are not particularly limited in the present invention. As an example, a drying method by warm air, hot air, or low-humidity air, a vacuum drying method, and a drying method by irradiation with (far)-infrared radiation and electron beam may be used. The drying speed is adjusted so that the solvent can be removed as quickly as possible within the range of speed that does not cause cracks in the positive electrode active material layer due to normal stress concentration or within the range of speed at which the positive electrode active material layer does not peel off from the positive electrode current collector.

Additionally, the density of the positive electrode active material in the positive electrode may be increased by pressing the current collector after the drying. Methods, such as a mold press and a roll press, are mentioned as a press method.

The porosity of the positive electrode manufactured by the composition and the manufacturing method as described above, specifically the positive electrode active material layer may be 50 to 80%, preferably 60 to 75%. When the porosity of the positive electrode is less than 50%, since the filling degree of the positive electrode slurry composition containing the positive electrode active material, the conductive material, and the binder becomes too high, and thus the electrolyte enough to exhibit the ionic conductivity and/or the electrical conductivity between the positive electrode active materials cannot be maintained, there is a problem that an output characteristics or cycle characteristics of the battery may be deteriorated, and the overvoltage and discharge capacity of the battery are severely reduced. On the contrary, when the porosity of the positive electrode exceeds 80% and thus has an excessively high porosity, there are problems that the physical and electrical connections with the current collector are lowered, and thus the bonding force is lowered and the reaction is difficult, and that the increased pores are filled with electrolyte, and thus the energy density of the battery may be lowered. Therefore, the porosity of the positive electrode is adjusted appropriately within the above range.

In addition, the loading amount of sulfur in the positive electrode according to the present invention, that is, the mass of sulfur per unit area of the positive electrode active material layer in the positive electrode may be 0.5 to 15 mg/cm$^2$, preferably 1 to 10 mg/cm$^2$.

The negative electrode is as described above.

The electrolyte contains lithium ions, and is intended to cause an electrochemical oxidation or reduction reaction in the positive electrode and the negative electrode through them.

The electrolyte may be a non-aqueous electrolyte or a solid electrolyte that does not react with lithium metal, but is preferably a non-aqueous electrolyte, and comprises an electrolyte salt and an organic solvent.

The electrolyte salt which is comprised in the non-aqueous electrolyte is lithium salt. The lithium salt can be used without limitation as long as it is commonly used in an electrolyte solution for a lithium secondary battery. For example, lithium salt may be LiCl, LiBr, LiI, LiClO$_4$, LiBF$_4$, LiB$_{10}$Cl$_{10}$, LiPF$_6$, LiCF$_3$SO$_3$, LiCF$_3$CO$_2$, LiAsF$_6$, LiSbF$_6$, LiAlCl$_4$, CH$_3$SO$_3$Li, (CF$_3$SO$_2$)$_2$NLi, LiN(SO$_2$F)$_2$, lithium chloroborane, lithium lower aliphatic carboxylate, tetraphenyl lithium borate, lithium imide, etc.

The concentration of the lithium salt may be 0.2 to 2 M, specifically 0.4 to 2 M, and more specifically 0.4 to 1.7 M, according to various factors, such as an accurate composition of an electrolyte solvent mixture, solubility of salt, conductivity of dissolved salt, charging and discharging conditions of a battery, a working temperature, and other factors known in a lithium battery field. When the concentration of the lithium salt is used less than 0.2 M, the conductivity of the electrolyte is lowered and thus the electrolyte performance may be deteriorated, and when the concentration thereof exceeds 2 M, the viscosity of the electrolyte is increased and the mobility of lithium ion may be reduced.

As the organic solvent contained in the non-aqueous electrolyte solution, those conventionally used in an electrolyte solution for a lithium secondary battery may be used without limitation, and for example, ether, ester, amide, linear carbonate, cyclic carbonate, etc. may be used alone or in combination of two or more. Among them, an ether-based compound may be included as a representative example.

The ether-based compound may include non-cyclic ether and cyclic ether.

For example, the non-cyclic ether may be, but is not limited to, at least one selected from the group consisting of dimethyl ether, diethyl ether, dipropyl ether, methylethyl ether, methylpropyl ether, ethylpropyl ether, dimethoxyethane, diethoxyethane, ethylene glycol ethylmethylether, diethylene glycol dimethyl ether, diethylene glycol diethyl ether, diethylene glycol methylethyl ether, triethylene glycol dimethyl ether, triethylene glycol diethyl ether, triethylene glycol methylethyl ether, tetraethylene glycol dimethyl ether, tetraethylene glycol diethyl ether, tetraethylene glycol methylethyl ether, polyethylene glycol dimethyl ether, polyethylene glycol diethyl ether, and polyethylene glycol methylethyl ether.

For example, the cyclic ether may be, but is not limited to, at least one selected from the group consisting of 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxy benzene, 1,3-dimethoxy benzene, 1,4-dimethoxy benzene, and isosorbide dimethyl ether.

Examples of the ester of the organic solvent may be, but is not limited to, any one selected from the group consisting of methyl acetate, ethyl acetate, propyl acetate, methyl propionate, ethyl propionate, propyl propionate, $\gamma$-butyrolactone, $\gamma$-valerolactone, $\gamma$-caprolactone, $\sigma$-valerolactone, and $\varepsilon$-caprolactone, and a mixture of two or more thereof.

Specific examples of the linear carbonate compound may representatively be, but is not limited to, any one selected from the group consisting of dimethyl carbonate (DMC), diethyl carbonate (DEC), dipropyl carbonate, ethylmethyl carbonate (EMC), methylpropyl carbonate, and ethylpropyl carbonate, or a mixture of two or more thereof.

In addition, specific examples of the cyclic carbonate compound may be any one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate, and halides thereof, or a mixture of two or more thereof. Examples of such halides comprise, but are not limited to, fluoroethylene carbonate (FEC) and the like.

The electrolyte may further comprise a nitric acid or nitrous acid-based compound as an additive in addition to the electrolyte salt and the organic solvent described above. The nitric acid or nitrite-based compound has an effect of forming a stable film on a lithium metal electrode, which is a negative electrode, and improving charging/discharging efficiency.

The nitric acid or nitrous acid-based compound is not particularly limited in the present invention, but may be at least one selected from the group consisting of inorganic nitric acid or nitrous acid compounds such as lithium nitrate ($LiNO_3$), potassium nitrate ($KNO_3$), cesium nitrate ($CsNO_3$), barium nitrate ($Ba(NO_3)_2$), ammonium nitrate ($NH_4NO_3$), lithium nitrite ($LiNO_2$), potassium nitrite ($KNO_2$), cesium nitrite ($CsNO_2$) and ammonium nitrite ($NH_4NO_2$); organic nitric acid or nitrous acid compounds such as methyl nitrate, dialkyl imidazolium nitrate, guanidine nitrate, imidazolium nitrate, pyridinium nitrate, ethyl nitrite, propyl nitrite, butyl nitrite, pentyl nitrite, and octyl nitrite; organic nitro compounds such as nitromethane, nitropropane, nitrobutane, nitrobenzene, dinitrobenzene, nitropyridine, dinitropyridine, nitrotoluene, dinitrotoluene, and combinations thereof, and preferably, lithium nitrate is used.

The injection of the electrolyte may be performed at an appropriate stage of the manufacturing processes of the electrochemical device, depending on the manufacturing process and required properties of the final product. That is, the injection can be performed before assembling the electrochemical device or at the final stage of assembling the electrochemical device.

A separator may be additionally comprised between the positive electrode and the negative electrode.

The separator may be made of a porous non-conductive or insulating material that separates or insulates the positive electrode and the negative electrode from each other and enables transport of lithium ions between the positive electrode and the negative electrode. The separator may be used without special limitation as long as it is used as a separator in a conventional lithium secondary battery. The separator may be an independent member such as a film, or may be a coating layer added to the positive and/or negative electrodes.

It is preferable that the separator has excellent wettability to the electrolyte while having low resistance to ion migration of the electrolyte.

The separator may be made of a porous substrate, and the porous substrate may be used as long as it is a porous substrate commonly used for a secondary battery, and porous polymer films may be used alone or by laminating them, and for example, a nonwoven fabric or a polyolefin-based porous membrane made of glass fibers, polyethylene terephthalate fibers, etc. having a high melting point may be used, but is not limited thereto.

The material of the porous substrate is not particularly limited in the present invention, and any material can be used as long as it is a porous substrate commonly used in an electrochemical device. For example, the porous substrate may comprise at least one material selected from the group consisting of polyolefin such as polyethylene and polypropylene, polyester such as polyethyleneterephthalate and polybutyleneterephthalate, polyamide, polyacetal, polycarbonate, polyimide, polyetheretherketone, polyethersulfone, polyphenyleneoxide, polyphenylenesulfide, polyethylenenaphthalate, polytetrafluoroethylene, polyvinylidene fluoride, polyvinyl chloride, polyacrylonitrile, cellulose, nylon, poly(p-phenylene benzobisoxazole), and polyarylate.

The thickness of the porous substrate is not particularly limited, but may be 1 to 100 $\mu$m, preferably 5 to 50 $\mu$m. Although the thickness range of the porous substrate is not particularly limited to the above-mentioned range, if the thickness is excessively thinner than the lower limit described above, mechanical properties are deteriorated and thus the separator may be easily damaged during use of the battery.

The average diameter and porosity of the pores present in the porous substrate are also not particularly limited, and may be 0.001 $\mu$m to 50 $\mu$m and 10 to 95%, respectively.

The lithium secondary battery according to the present invention can be manufactured by lamination, stacking, and folding processes of the separator and the electrodes, in addition to the usual winding process.

The shape of the lithium secondary battery is not particularly limited, and may be various shapes such as a cylindrical shape, a laminate shape, and a coin shape.

Also, the present invention provides a battery module including the lithium-sulfur battery described above as a unit battery.

The battery module may be used as a power source for medium to large-sized devices requiring high temperature stability, long cycle characteristics, high capacity characteristics, and the like.

Examples of such medium to large-sized devices may comprise, but is not limited to, a power tool powered and moved by an electric motor; an electric car including an electric vehicle (EV), a hybrid electric vehicle (HEV), a plug-in hybrid electric vehicle (PHEV), and the like; an electric motorcycle including an electric bike (E-bike) and an electric scooter (E-scooter); an electric golf cart; a power storage system, etc.

Hereinafter, preferred Examples of the present invention will be described in order to facilitate understanding of the present invention. It will be apparent to those skilled in the art, however, that the following examples are only illustrative of the present invention and various changes and modifications can be made within the scope and spirit of the present invention, and that such variations and modifications are within the scope of the appended claims.

**Examples and Comparative Examples**

[Example 1]

10 ml of fluoroethylene carbonate was sprayed on the surface of a lithium metal thin film with a thickness of 60 $\mu$m and then rolled by a roll press machine at room temperature (25°C), and dried in a vacuum oven of 80°C for 12 hours to manufacture a 45 $\mu$m-thick lithium metal electrode with a lithium fluoride protective layer formed on the surface of the lithium metal thin film.

[Example 2]

90 wt.% of a sulfur-carbon composite (S:C = 75:25 (weight ratio)) as a positive electrode active material, 5 wt.% of Denka black as a conductive material, and 5 wt.% of styrene butadiene rubber/carboxymethylcellulose (SBR:CMC = 70:30 (weight ratio)) as a binder were mixed to prepare a positive electrode slurry composition.

The prepared positive electrode slurry composition was applied on a 20 $\mu$m-thick aluminum current collector and dried at 50°C for 12 hours, and pressed by a roll press machine to manufacture a positive electrode. At this time, a loading amount of the positive electrode active material was 5.4 mAh/cm$^2$ or less, and the porosity of the positive electrode was 68%.

The manufactured positive electrode and the lithium metal electrode manufactured in Example 1 were positioned to face each other and a polyethylene separator with a thickness of 20 $\mu$m and the porosity of 68% was interposed therebetween, and then 0.1 ml of an electrolyte was injected to manufacture a lithium secondary battery.

At this time, as the electrolyte, a mixture solution formed by dissolving 1.0 M of lithium bis(trifluoromethane sulfonyl)imide (LiTFSI) and 1.0 wt.% of lithium nitrate (LiNO$_3$) in an organic solvent consisting of 1,3-dioxolane and dimethyl ether (DOL:DME = 1:1 (volume ratio)) was used.

[Comparative Example 1]

A lithium metal electrode was manufactured using a lithium metal thin film having a thickness of 45 $\mu$m without forming a lithium fluoride protective layer.

[Comparative Example 2]

A lithium metal thin film having a thickness of 45 $\mu$m was immersed in fluoroethylene carbonate for 1 hour, and then dried in a vacuum oven of 80°C for 12 hours to manufacture a lithium metal electrode with a lithium fluoride protective layer formed on the surface of the lithium metal thin film.

[Comparative Example 3]

Except for using the lithium metal electrode of Comparative Example 1 instead of the lithium metal electrode of Example 1, a lithium secondary battery was manufactured in the same manner as Example 2.

[Comparative Example 4]

Except for using the lithium metal electrode of Comparative Example 2 instead of the lithium metal electrode of Example 1, a lithium secondary battery was manufactured in the same manner as Example 2.

**Experimental Example 1. X-ray photoelectron spectroscopy analysis**

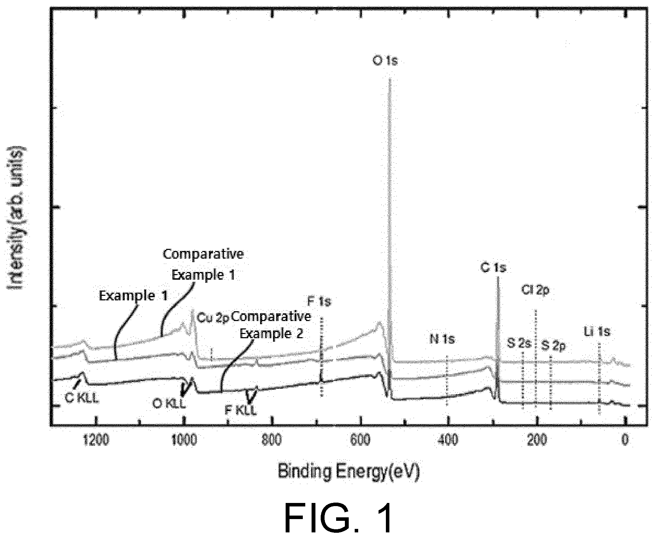

With respect to the surfaces of the lithium metal electrodes manufactured in Example 1 and Comparative Examples 1 and 2, X-ray photoelectron spectroscopy (XPS) analysis was performed. An XPS device used for the analysis was K-ALPHA by Thermo Fieher scientific company, and at this time, an etching rate was 0.09 nm/s and the obtained data was analyzed using Avantage software. At this time, the obtained results were illustrated in Tables 1 to 3 and FIGS. 1 to 3.

[Table 1]

| | Element (atom%) | | | | | | | |
|---|---|---|---|---|---|---|---|---|
| | F | Li | C | O | N | Cl | S | Si |
| Example 1 | 2.4 | 27.3 | 45.9 | 23.0 | 0.6 | 0.2 | 0.2 | 0.4 |
| Comparative Example 1 | 0.0 | 37.7 | 21.8 | 40.2 | 0.1 | 0.1 | 0.1 | 0.0 |
| Comparative Example 2 | 1.5 | 25.6 | 50.6 | 21.6 | 0.5 | 0.2 | 0.0 | 0.0 |

[Table 2]

| Example 1 | | | | | | | | |
|---|---|---|---|---|---|---|---|---|
| Etching time(s) | Element (atom%) | | | | | | | |
| | F | Li | C | O | N | Cl | S | Si |
| 0 | 3.4 | 28.2 | 41.5 | 25.8 | 0.5 | 0.2 | 0.3 | 0.1 |
| 10 | 4.7 | 36.3 | 26.9 | 31.1 | 0.4 | 0.2 | 0.3 | 0.1 |
| 30 | 5.8 | 41.5 | 19.7 | 32.0 | 0.4 | 0.2 | 0.3 | 0.1 |
| 50 | 6.3 | 44.9 | 16.3 | 31.6 | 0.3 | 0.2 | 0.3 | 0.1 |
| 100 | 6.7 | 54.3 | 10.4 | 27.8 | 0.3 | 0.2 | 0.2 | 0.1 |
| 200 | 5.3 | 60.6 | 6.9 | 26.7 | 0.2 | 0.1 | 0.1 | 0.1 |
| 500 | 2.3 | 68.9 | 4.0 | 24.4 | 0.4 | 0.0 | 0.0 | 0.0 |
| 1000 | 1.3 | 76.1 | 3.1 | 18.8 | 0.6 | 0.0 | 0.1 | 0.0 |
| 2000 | 0.7 | 82.6 | 2.6 | 13.4 | 0.7 | 0.0 | 0.0 | 0.0 |
| 3000 | 0.4 | 86.1 | 1.7 | 10.8 | 1.0 | 0.0 | 0.0 | 0.0 |
| 5000 | 0.3 | 90.1 | 1.3 | 7.3 | 1.0 | 0.0 | 0.0 | 0.0 |

[Table 3]

| Comparative Example 2 | | | | | | | | |
|---|---|---|---|---|---|---|---|---|
| Etching time(s) | Element (atom%) | | | | | | | |
| | F | Li | C | O | N | Cl | S | Si |
| 0 | 1.7 | 22.6 | 52.1 | 23.0 | 0.4 | 0.2 | 0.0 | 0.0 |
| 10 | 2.6 | 35.8 | 29.7 | 31.3 | 0.4 | 0.2 | 0.0 | 0.0 |

(continued)

| Comparative Example 2 | | | | | | | | |
|---|---|---|---|---|---|---|---|---|
| Etching time(s) | Element (atom%) | | | | | | | |
| | F | Li | C | O | N | Cl | S | Si |
| 30 | 2.3 | 41.4 | 22.0 | 33.8 | 0.3 | 0.2 | 0.0 | 0.0 |
| 50 | 2.1 | 45.4 | 18.2 | 33.8 | 0.3 | 0.2 | 0.0 | 0.0 |
| 100 | 1.5 | 56.3 | 12.4 | 29.5 | 0.2 | 0.1 | 0.0 | 0.0 |
| 200 | 1.0 | 61.6 | 8.3 | 28.7 | 0.3 | 0.1 | 0.0 | 0.0 |
| 500 | 0.6 | 68.9 | 4.7 | 25.3 | 0.4 | 0.1 | 0.0 | 0.0 |
| 1000 | 0.3 | 76.5 | 3.4 | 19.2 | 0.5 | 0.1 | 0.0 | 0.0 |
| 2000 | 0.3 | 81.9 | 2.8 | 14.2 | 0.7 | 0.1 | 0.0 | 0.0 |
| 3000 | 0.3 | 84.2 | 2.3 | 12.0 | 1.1 | 0.1 | 0.0 | 0.0 |
| 5000 | 0.2 | 90.8 | 1.1 | 6.8 | 1.0 | 0.1 | 0.0 | 0.0 |

FIG. 1 and Table 1 illustrate XPS spectra of a fluoride protective layer, and in the case of Example 1, it can be confirmed that the fluorine content is 1.6 times higher than that of Comparative Example 2.

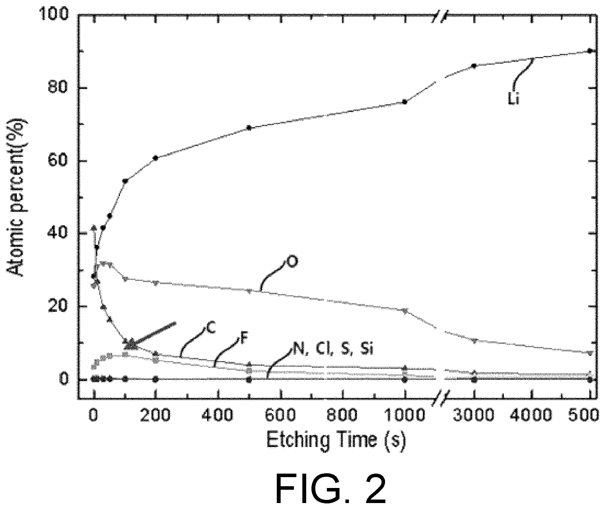

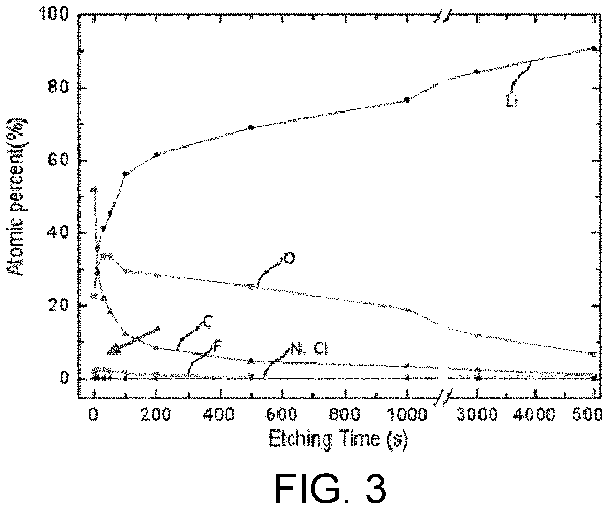

In addition, FIGS. 2 and 3 and Tables 2 and 3 illustrate XPS depth profiling of a lithium fluoride protective layer, and it can be seen that the lithium fluoride protective layer was 90 nm (etching time: 1000 s) in Example 1, while 18 nm (etching time: 200 s) in Comparative Example 2.

From the result, it can be confirmed that the lithium metal electrode manufactured by the manufacturing method of the present invention is formed with a thick lithium fluoride protective layer while having a high fluorine content.

**Experimental Example 2. Evaluation of battery performance**

With respect to the battery manufactured in Example 2 and Comparative Examples 3 and 4, the performance was evaluated using a charge/discharge measuring device (LAND CT-2001A, a product by Wuhan company).

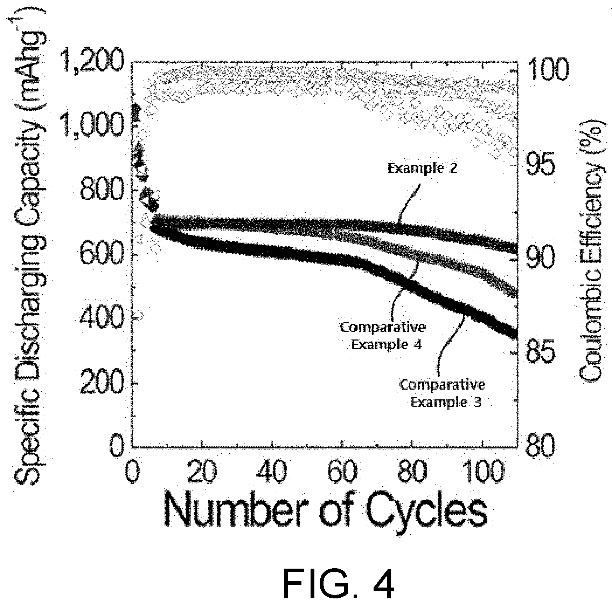

Specifically, a discharge current rate at 25°C was set to 0.5 C, and then 110 cycles of charging/discharging were repeated to measure capacity and lifetime characteristics. The result obtained at this time was illustrated in Table 4 and FIG. 4.

[Table 4]

| | Capacity retention rate (%) to 7th cycle |
|---|---|
| Example 2 | 87.0 |
| Comparative Example 3 | 50.0 |
| Comparative Example 4 | 67.0 |

As illustrated in FIG. 4 and Table 4, in the case of the battery according to Example 2, it can be seen that the overall performance is excellent compared to the battery of Comparative Examples 3 and 4.

Specifically, through FIG. 4 and Table 4, it can be confirmed that in the case of the battery of Example 2 that used the lithium metal electrode including the lithium fluoride protective layer manufactured according to the present invention, the capacity and a retention rate thereof are higher compared to Comparative Example 3 that used the lithium metal electrode without the lithium fluoride protective layer and Comparative Example 4 that used the lithium metal electrode in which a lithium fluoride protective layer is formed by a conventional immersing method.

From the result, it can be seen that in the case of the lithium secondary battery including the lithium metal electrode manufactured according to the manufacturing method of the present invention, excellent capacity and lifetime characteristics are exhibited.

**Claims**

1. A manufacturing method of a lithium metal electrode comprising steps of:

   (a) applying fluoroethylene carbonate by pouring, spraying, sprinkling, or atomization on at least one surface of a lithium metal layer; and
   (b) rolling the lithium metal layer applied with the fluoroethylene carbonate to form a lithium fluoride protective layer on the at least one surface of the lithium metal layer.

2. The manufacturing method of the lithium metal electrode according to claim 1, wherein the lithium metal layer comprises a lithium metal or a lithium alloy.

3. The manufacturing method of the lithium metal electrode according to claim 1, wherein the rolling step (b) is performed by positioning the lithium metal layer applied with the fluoroethylene carbonate between rolling units and applying pressure.

4. The manufacturing method of the lithium metal electrode according to claim 1, wherein the rolling step (b) is performed under a temperature condition of 10 to 80°C.

5. The manufacturing method of the lithium metal electrode according to claim 1, wherein a thickness reduction rate of the lithium metal layer before and after the rolling step (b) is 10% or more.

**Patentansprüche**

1. Herstellungsverfahren für eine Lithiummetallelektrode, umfassend die Schritte:

   (a) Aufbringen von Fluorethylencarbonat durch Gießen, Sprühen, Berieseln oder Zerstäuben auf mindestens eine Oberfläche einer Lithiummetallschicht; und
   (b) Walzen der aufgebrachten Lithiummetallschicht mit dem Fluorethylencarbonat, um eine Lithiumfluoridschutzschicht auf der mindestens einen Oberfläche der Lithiummetallschicht zu bilden.

2. Herstellungsverfahren für die Lithiummetallelektrode nach Anspruch 1, wobei die Lithiummetallschicht ein Lithiummetall oder eine Lithiumlegierung umfasst.

3. Herstellungsverfahren für die Lithiummetallelektrode nach Anspruch 1, wobei der Walzschritt (b) durch Positionieren der mit dem Fluorethylencarbonat aufgebrachten Lithiummetallschicht zwischen Walzeinheiten und Aufbringen von Druck durchgeführt wird.

4. Herstellungsverfahren für die Lithiummetallelektrode nach Anspruch 1, wobei der Walzschritt (b) unter einer Temperaturbedingung von 10 bis 80 °C durchgeführt wird.

5. Herstellungsverfahren für die Lithiummetallelektrode nach Anspruch 1, wobei eine Dickenreduktionsrate der Lithiummetallschicht vor und nach dem Walzschritt (b) 10 % oder mehr beträgt.

**Revendications**

1. Procédé de fabrication d'une électrode au lithium métal comprenant les étapes suivantes:

   (a) application de carbonate de fluoroéthylène par coulage, pulvérisation, aspersion ou atomisation sur au moins une surface d'une couche métallique au lithium.
   (b) laminage de la couche métallique au lithium métal appliquée avec le carbonate de fluoroéthylène pour former une couche protectrice de fluorure de lithium sur au moins une surface de la couche métallique au lithium.

2. Procédé de fabrication de l'électrode métallique au lithium selon la revendication 1, la couche métallique au lithium comprenant un métal de lithium ou un alliage de lithium.

**3.** Procédé de fabrication de l'électrode métallique au lithium métal selon la revendication 1, l'étape de laminage (b) étant réalisée en positionnant la couche de lithium métal appliquée avec le carbonate de fluoroéthylène entre des dispositifs de laminage et en appliquant une pression.

**4.** Procédé de fabrication de l'électrode métallique au lithium selon la revendication 1, l'étape de laminage (b) étant effectuée avec une température comprise entre 10 et 80°C.

**5.** Procédé de fabrication de l'électrode métallique au lithium selon la revendication 1, comportant un taux de réduction de l'épaisseur de la couche de lithium métal avant et après l'étape de laminage (b) de 10 % ou davantage.

FIG. 1

FIG. 2

FIG. 3

FIG. 4

## REFERENCES CITED IN THE DESCRIPTION

### Patent documents cited in the description

- KR 20190071618
- EP 4037022 A1
- KR 100413796 B1
- CN 110444735 A

### Non-patent literature cited in the description

- **NGOC DUC TRINH et al.** An Artificial Lithium Protective Layer that Enables the Use of Acetonitrile-Based Electrolytes in Lithium Metal Batteries. *Angewandte Chemie*, 2018, vol. 57 (18), 5072-5075